Europäisches Patentamt

European Patent Office

Office européen des brevets

(11) Publication number: **0 323 725 A2**

# EUROPEAN PATENT APPLICATION

(21) Application number: **88312018.0**

(22) Date of filing: **19.12.88**

(51) Int. Cl.4: **F16K 27/00**

(30) Priority: **06.01.88 GB 8800170**

(43) Date of publication of application:
**12.07.89 Bulletin 89/28**

(84) Designated Contracting States:
**DE ES FR GB IT**

(71) Applicant: **AQUALISA PRODUCTS LIMITED**
**6 The Flyers's Way**
**Westerham Kent(GB)**

(72) Inventor: **Goldsmith, Derek John**
**Orchard House Crockham Hill**
**Edenbridge Kent TN8 6TE(GB)**

(74) Representative: **Williams, Trevor John et al**
**J.A. KEMP & CO. 14 South Square Gray's Inn**
**London WC1R 5EU(GB)**

(54) **Improved fitment for a bathroom mixer unit.**

(57) A tap fitment has a cast body (10) to which hot
and cold water inlets are provided. Each water inlet
connects with an appropriate port (23) leading to a
thermo-responsive cartridge for subsequent direction
to a shower outlet (16) with a ported barrier (20)
being provided between each inlet and respective
tap outlet connections (21), the port (26) through the
barrier being closable by a manually controlled tap
to allow water to flow to a main fitment outlet. The
cartridge is retained in place by means of screws
which engage threaded bores near the bottom of the
cartridge receiving chamber in the fitment. The
bores are non-symmetrically arranged about the axis
of the control chamber whereby the control unit is
only securable in the control chamber in either one
of two alternative positions rotated through 180°
relative to each other.

Fig.6.

## IMPROVED FITMENT FOR A BATHROOM MIXER UNIT

This invention relates to an improved fitment for a bathroom mixer unit and in its various apects relates to an improved method of mounting a control unit or cartridge in a fitment body and to a shower and tap fitment adapted to have normal tap controlled outlets as well as a shower outlet for a temperature controlled mixed flow of water.

In one aspect, the invention provides a fitment having connections for the supply of hot and cold water thereto with the water from those inlet connections being permanently connected to a chamber for receiving a shower control unit and for separate tap controlled connection to a discharge outlet or outlets for supply to a bath or the like. Thus, in its preferred form as later described in detail, the tap fitment has a cast body in which hot and cold inlets are provided. Each water inlet connects to an appropriate inlet port to a chamber for receiving a temperature responsive control cartridge for subsequent direction of the water to a shower outlet with a ported barrier being provided between each inlet and respective tap outlet connections, the port through that barrier being closable by a manually controlled tap to allow water to flow to individual hot and cold outlets or, as is preferred, to a single mixer outlet spout, as required in the particular construction.

According to this aspect of the present invention, there is provided a tap and shower fitment comprising a body provided with partition walls dividing it into first and second inlet chambers and a temperature control chamber, the first and second inlet chambers each being divided into a tap sub-chamber and a shower sub-chamber by an apertured wall, an inlet port for communication with a water inlet being provided to each shower sub-chamber, a communication being provided from each shower sub-chamber to the temperature control chamber, a communication being provided from each tap sub-chamber to an outlet, an outlet for communication with a shower leading from a said temperature control chamber, said temperature control chamber being adapted to receive a control unit for controlling the proportions and flow rate of fluid received from the respective shower sub-chambers and passed to said shower outlet, and said body being adapted to mount control valves for controlling flow of fluid through the respective apertures in the walls separating the sub-chambers.

Preferably, the body comprises a single outlet spout into which the communications from the two tap sub-chambers open. Conveniently, the fitment may include, as the valves, conventional taps carrying washers for engagement with valve seats around the peripheries of the said apertures.

According to a further aspect of the invention, there is provided a shower fitment comprising a control unit and a body having a control chamber provided with two inlets and an outlet and being open at one end for receipt of the control unit, said control unit having two opposed inlet ports alignable with said inlets and two outlet ports one or other of which is alignable with the outlet depending upon which inlet port is aligned with which inlet, said control unit being provided with control means for controlling the relative proportions of fluid flow from the two inlet ports to the outlet port and for the overall volume rate of flow to the outlet port, said control unit being secured in the control chamber by screws engaging threaded bores in the interior wall of said control chamber, said bores being non-symmetrically arranged about the axis of the control chamber whereby the control unit is only securable in the control chamber in either one of two alternative positions rotated through 180° relative to each other.

Preferably, the control unit body is non-symmetrical about its axis in order to provide a key and keyway action in conjunction with the body of the fitment to permit insertion of the control unit only in said two alternative positions.

It is important that the control mechanism should be securable in the housing of the control unit in one orientation only relative to the control unit housing and in order to ensure this, whilst using the same screws to secure the control mechanism to the control unit housing and the control unit housing in the control chamber, it is preferred that the screws pass through apertures adjacent the open end of the housing with the apertures being non-symmetric about the axis of the control unit such that there is only one rotational position in which the control mechanism can be secured relative to the housing. By having those apertures adjacent the open end of the housing, sufficient distance can be allowed from these apertures to the threaded bores in the fitment body such that the screws are slightly non-parallel with the axis of the control chamber when engaged in said bores. This non-parallel arrangement of these screws provides sufficient play for the control unit housing itself to be securable in two alternative positions with the apertures in the control unit housing near its open end not being aligned parallel with the axis of the control unit with the bores in the fitment body. Preferably, four screws are used with two adjacent screws being angularly offset peripherally of the control unit in one direction and the other two adjacent screws being angularly offet peripherally of the control unit in the opposite direction.

Various standard control units may be used in the fitment of the present invention, depending upon the type of control unit required. Because of the rotational possibility of the control unit being used in either of two 180° rotated positions, the control unit can be readily mounted in position for use in a particular fitment regardless as to which of the fitment inlets are connected to the hot and cold water supplies. Thus, where the fitment is supplied complete with the control unit in situ, the control unit cartridge can readily be removed and rotated through 180° before replacement when it is desired to reverse the connection of the hot and cold inlets to the fitment.

The invention will be further described, by way of example, with reference to the accompanying drawings, in which:

Figure 1 is a longitudinal cross-sectional view of a tap and shower fitment having a temperature control unit cartridge mounted therein;

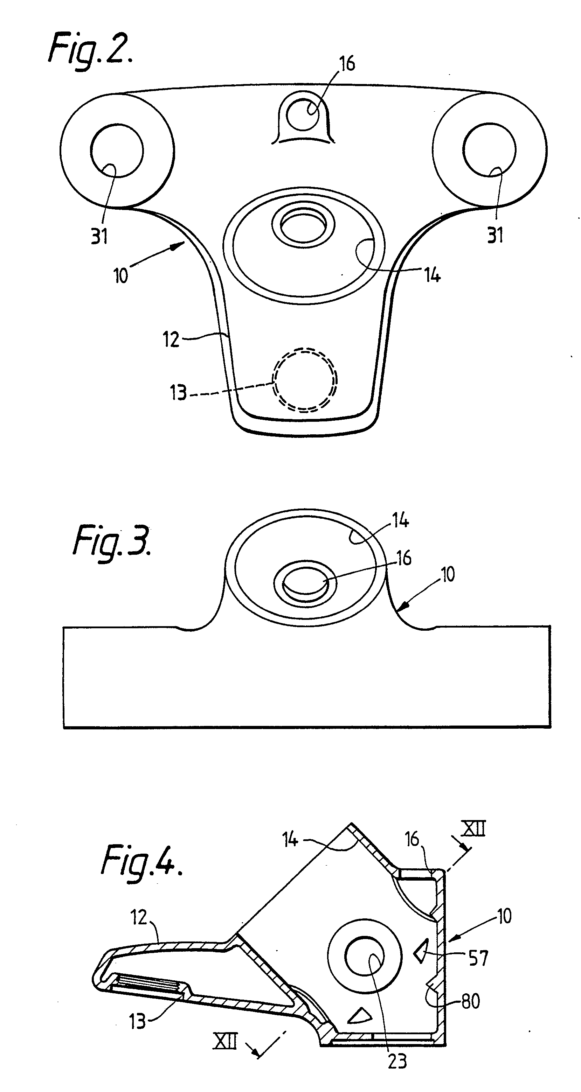

Figure 2 is a top view to a reduced scale of the body of the fitment;

Figure 3 is a front view of the body of Figure 2;

Figure 4 is a vertical longitudinal section through the body of Figure 2;

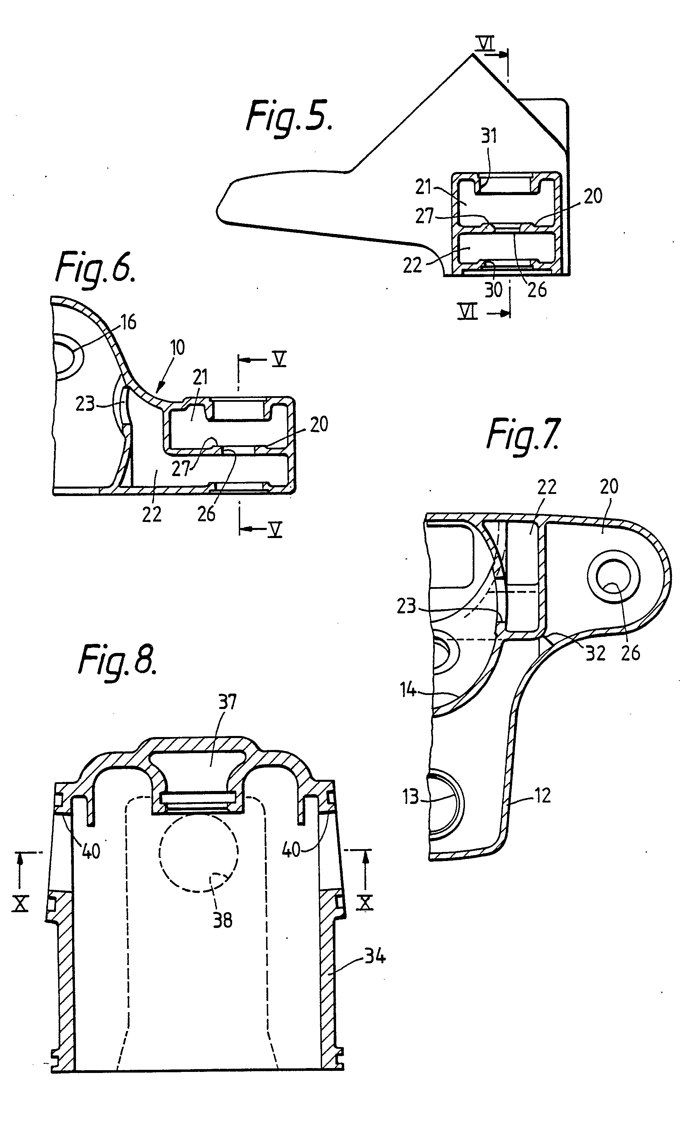

Figure 5 is a vertical section taken along the line V-V of Figure 6;

Figure 6 is the fragmentary cross-sectional view taken along the line VI-VI of Figure 5;

Figure 7 is a fragmentary horizontal section of the body of Figure 2;

Figure 8 is a longitudinal section of the housing of the control unit cartridge;

Figure 9 is a longitudinal cross-sectional view of the control unit cartridge taken at right-angles to the view of Figure 8;

Figure 10 is a cross-sectional view taken along the line X-X of Figure 8;

Figure 11 is a view from the open end to a reduced scale of the control unit cartridge housing; and

Figure 12 is a cross-sectional view taken along line XII-XII of Figure 4.

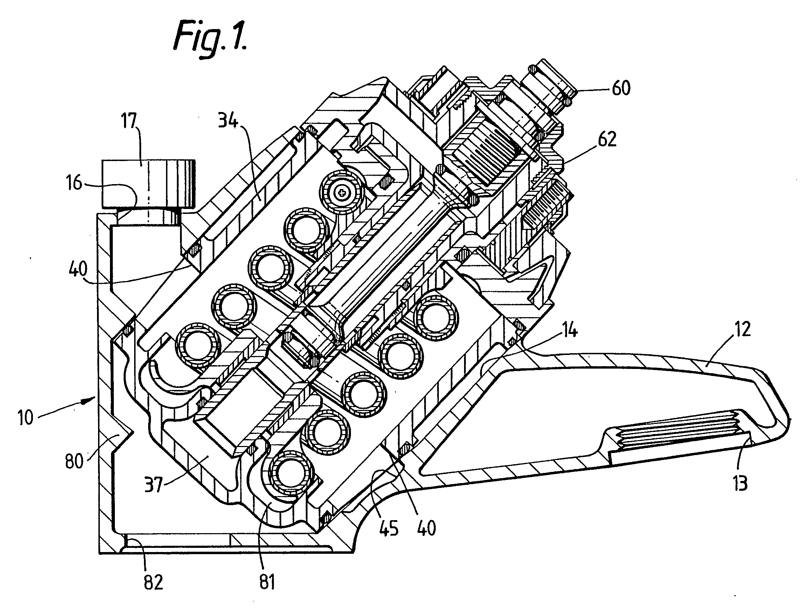

Referring to the drawings, a tap and shower fitment is shown having a body 10 comprising an outlet spout 12 having an outlet opening 13. Within the body 10 there is provided a control chamber 14 adapted to receive a temperature control unit as shown in Figure 1. The fitment is provided with an outlet 16 for connection to a shower, a connecting unit 17 being illustrated in Figure 1 as mounted to the outlet 16.

The fitment is provided with respective inlets 30 leading to respective chambers each of which is divided by a wall 20 into an upper tap sub-chamber 21 and a lower shower sub-chamber 22. A communication 23 leads from the sub-chamber 22 as an inlet to the control chamber 14. A communication 32 connects each of the tap sub-chambers 21 to the interior of the spout 12. Each wall 20 is provided with an aperture 26 therethrough with a seat 27 being provided around the top of the periphery of each aperture 26. Aligned with the aperture 26 is a mounting 31 for a tap or other control valve engageable with the seat 27 to control communication between the chambers 22 and 21.

Mounted within the chamber 14 is a temperature control and fluid flow control unit cartridge having a housing 34. The housing 34 has two outlet ports 40 alternatively communicating with the shower outlet 16, a hot water inlet 36 communicating with an inlet duct 37 and a cold water inlet 38 communicating with an inlet duct 39. The control mechanism of the temperature control unit will not be described in detail since this can be of known design. As illustrated in Figure 1, the control unit is a temperature responsive cartridge with the inlet 36 being the cold water inlet and the inlet 38 the hot water inlet. The control unit in Figure 1 is shown with the temperature control unit fully expanded and with the cold water inlet 37 fully open and the hot water inlet fully closed. As the temperature control unit contracts the connection to the inlet 37 will gradually close with concomitant opening of the inlet 38 leading to the hot water. Rotation of the knob 60 controls on/off and volume throughput of water whereas a separate rotary control 62 controls the position of one end of the temperature responsive element and thus the temperature setting of the control unit. Further detailed description of this control unit is considered to be superfluous as its construction is clear from the disclosure of the Specification of our British Patent No 2 008 724.

It will be appreciated that instead of using the temperature responsive control unit as shown alternative control units may be used as required, for example a simple manual cartridge which does not contain any temperature responsive element. With the arrangement shown in Figure 1, the space 81 within the control unit housing acts to hold and retain any lime or scale which may be deposited as fragments in the control unit during its normal life. If necessary, the unit can be removed and taken apart for removal of such collected deposits periodically as required.

The temperature control cartridge is retained in the chamber 14 by screws in a manner to be described.

Generally, the chamber 14 and the cartridge are of circular cross-section with the lower end of the chamber being tapered so as to facilitate sealing engagement with inclined sealing surfaces on the inner end of the cartridge housing. As shown in Figure 1, a recess 45 is provided opposite the connection of the shower 16 with the chamber 14 as a convenience of construction.

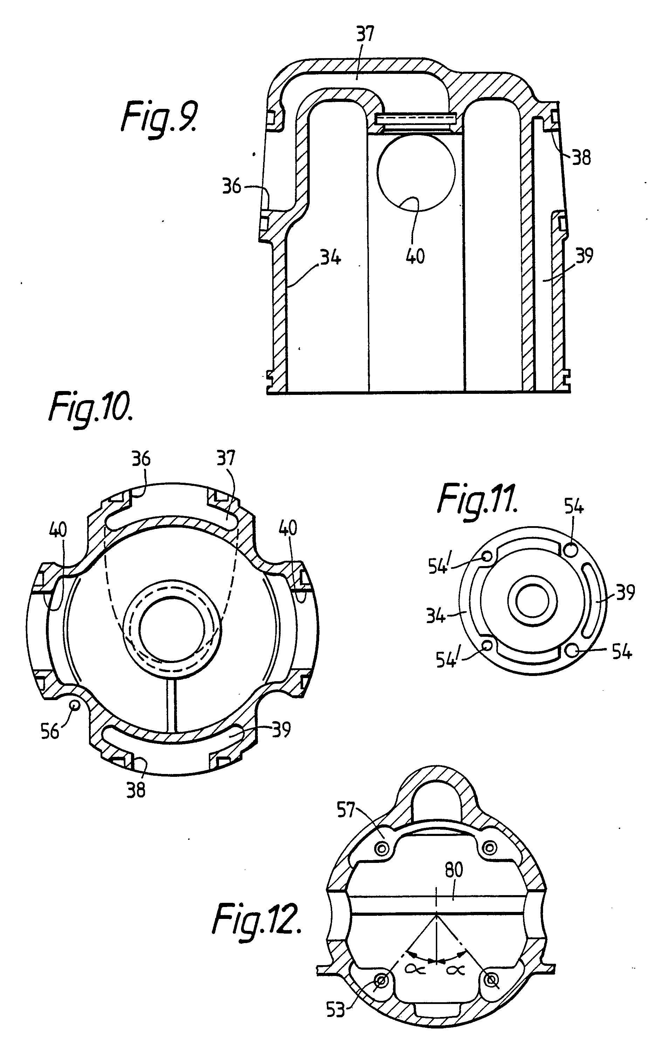

The cartridge is secured in the control chamber by means of screws, one of which is shown at 56 in Figure 10, which extend through apertures 54 in the body 34 and into threaded bores 53 at the bottom or lower end of the control chamber.

As shown in Figure 11, the apertures 54 and 54' near the upper end of the cartridge housing are non-symmetrically arranged about the axis of the cartridge. Thus, as shown, the spacing between the pair of apertures 54 is greater than the spacing between the pair of apertures 54'. Thus, when the screws 56 are used to retain the operating mechanism of the cartridge in the control unit housing, there is only one possible rotational position of the control mechanism in which it can be properly secured in position with the retaining apertures of the control mechanism being aligned with the apertures 54 and 54' to permit the passage of the locating screws 56 therethrough.

Near the bottom of the interior of the control chamber 14, within the fitment, there are provided machined ledges 57 into the upper surface of which open threaded bores 53. These bores 57 are not equally angularly spaced about the periphery of the control chamber, thus in a particular exemplary example, the angles $\alpha$ are 39°. With this arrangement, it is readily possible to have the retaining screws sufficiently accurately aligned to enable the control unit to be held down in either one of two alternative positions 180° apart but it is not possible for the control unit to be secured in position at an intermediate position. Thus it is ensured that the inlets 36 and 38 are aligned with one or other of the inlet ports 23 to the control chamber of the fitment. In order to assist further in this proper location of the control unit cartridge in the fitment control chamber, the body of the control unit at the portion thereof adjacent the communicating passage 37 projects slightly as compared with the remainder of the periphery of the chamber such that it can act as a key engaging what can be considered as a keyway provided between the portions of the housing on which the surfaces 57 are machined. The positions of the bores 53 are intermediate the alternative locations of the apertures 54 and 54' depending upon the orientation of the control unit so that when the control unit is rotated between its 180° separated positions, the screw entering any one of the bores will be equally oppositely inclined. Thus, in the preferred construction as illustrated, four screws are provided with two adjacent screws being angularly offset peripherally of the control unit in one direction and the other two adjacent screws being equally angularly offset peripherally of the control unit in the opposite direction.

After a control unit has been in position in a fitment for a number of years, it may become jammed therein such that it would be difficult to remove. In order to overcome this problem, a nib or ledge 80 is provided as a projection from the rear wall of the fitment. As may be readily appreciated from Figure 1, if a screwdriver or other suitable lever is inserted through the aperture 32, the edge of the projecting nib 80 can be used as a fulcrum such that leverage can be applied to the bottom end of the control unit cartridge to force it axially from the control chamber.

As indicated, further detailed description of the control unit itself is thought to be unnecessary. As can be seen sealing rings are provided about each of the inlet and outlet ports to the cartridge and further sealing rings are provided as required in the cartridge construction to prevent leakage of water therefrom.

With the arrangement as shown, the fitment provides permanent connection between the shower inlet sub-chambers 22 and the control chamber 14 so that the shower can be controlled exactly as required without reference to the taps used to control the main flow of water through the fitment when it is being used, for example, to fill a bath through spout 12. The spout 12 is connected with the water supply under the control of the respective taps opening and closing the respective apertures 26 by engagement of the tap washer with the seat 27.

The present construction provides a particularly convenient fitment which can be cast and which provides a convenient manner of operation with the fitment being ready adapted to have a control unit mounted therein in such a way that the orientation of the control unit is limited to two positions, the one to be used depending upon to which inlets of the fitment are connected the hot and cold water supplies.

## Claims

1. A tap and shower fitment comprising a body (10) provided with partition walls dividing it into first and second inlet chambers and a temperature control chamber (14), the first and second inlet chambers each being divided into a tap sub-chamber (21) and a shower sub-chamber (22) by an apertured wall (20), an inlet port (30) for communication with a water inlet being provided to each shower sub-chamber, a communication (23) being provided from each shower sub-chamber to the temperature control chamber, a communication (32) being provided from each tap sub-chamber to an outlet (12,13), an outlet (16) for communication with a shower leading from a said temperature control chamber, said temperature control chamber being adapted to receive a control unit (34) for controlling the proportions and flow rate of fluid received from the respective shower sub-chambers and passed to said shower outlet, and said body (10) being adapted to mount control valves for controlling flow of fluid through the respective apertures (26) in the walls (20) separating the sub-chambers.

2. A fitment according to claim 1, wherein the body comprises a single outlet spout (12) into which open the communications (32) from the two tap sub-chambers (21).

3. A fitment according to claim 1 or 2, including as valves conventional taps carrying washers for engagement with valve seats (27) around the peripheries of the said apertures (26).

4. A fitment according to any preceding claim, wherein the control chamber (14) is open at one end, its front end, for receipt of the control unit.

5. A fitment according to claim 4, wherein an access aperture (82) is provided from the bottom of the body to the bottom of the control chamber and a projection (80) is provided on the interior wall of the control chamber whereby the projection can be used as a fulcrum for a lever admitted through said access aperture for releasing a control unit from the control chamber.

6. A fitment according to claim 5, wherein the projection comprises a projecting nib or ledge (80) extending across the width of the bottom of the control chamber (14).

7. A fitment according to claim 4, 5 or 6, in combination with a control unit (34) having two opposed inlet ports (36,38) alignable with the communications (23) from the shower sub-chambers (22) and two outlet ports (40) one or other of which is alignable with shower outlet (16) depending upon which inlet port (36,38) is aligned with which communication (23).

8. A shower fitment comprising a control unit (34) and a body (10) having a control chamber (14) provided with two inlets (23) and an outlet (16) and being open at one end for receipt of the control unit, said control unit having two opposed inlet ports (36,38) alignable with said inlets and two outlet ports (40) one or other of which is alignable with the outlet (16) depending upon which inlet port is aligned with which inlet, said control unit being provided with control means (60,62) for controlling the relative proportions of fluid flow from the two inlet ports to the outlet port and for the overall volume rate of flow to the outlet port, said control unit (34) being secured in the control chamber by screws (56) engaging threaded bores (53) in the interior wall of said control chamber (14), said bores being non-symmetrically arranged about the axis of the control chamber whereby the control unit (34) is only securable in the control chamber in either one of two alternative positions rotated through 180° relative to each other.

9. A fitment according to claim 7 or 8, wherein the control chamber (14) is substantially circular in cross-section and the control unit (34) is also substantially circular in cross-section along a substantial portion of its length for receipt in the control chamber.

10. A fitment according to any one of claims 7 to 9, wherein the control unit body is non-symmetrical (adjacent 37) about its axis to provide a key and keyway action to permit insertion of the control unit in said two alternative positions.

11. A fitment according to any one of claims 7 to 10, wherein the control unit comprises an outer housing (34), open at one end and a control mechanism secured to said housing by said screws (56), said screws passing through apertures (54,54') adjacent the open end of the housing with said apertures being non-symmetrical about the axis of the control unit such that there is one rotational position only in which the control mechanism can be secured relative to the housing, sufficient distance being allowed between the apertures and the threaded bores (53) in the fitment body such that the screws are slightly non-parallel with the axis of the control chamber when engaged in said bores.

12. A fitment according to claim 11, wherein four screws (53) are provided with two adjacent screws being angularly offset peripherally of the control unit in one direction and the other two adjacent screws being equally angularly offset peripherally of the control unit in the opposite direction.

13. A fitment according to any one of claims 4 to 12, wherein the control chamber (14) is tapered at least at its inner end for sealing engagement with the control unit (34).

Fig.1.

Fig.2.

Fig.3.

Fig.4.

**Fig.5.**

**Fig.6.**

**Fig.7.**

**Fig.8.**

Fig.9.

37

36

34

40

38

39

Fig.10.

36    37

40    40

56

38    39

Fig.11.

54

54'

54'

34

39

54

Fig.12.

57

80

53